# EUROPEAN PATENT APPLICATION

(11) **EP 3 993 181 A1**
(43) Date of publication of application: **04.05.2022**
(21) Application number: 20205411.0
(22) Date of filing: 03.11.2020
(51) Int. Cl.: H01S 3/00, G02F 1/35, H01S 3/23, H01S 3/067

(54) **PROVIDING ULTRAFAST HIGH-ENERGY LASER PULSES**

(71) Applicant: Deutsches Elektronen-Synchrotron DESY, 22607 Hamburg (DE)
(72) Inventor: Maier, Andreas, 22607 Hamburg (DE); Winkelmann, Lutz, 22607 Hamburg (DE)

(57) **Abstract**

A method for providing a high-energy laser pulse is disclosed. According to the method, a beamlet pattern with a plurality of spatially distributed laser beamlets is provided. The beamlets are spread in time by introducing a different temporal delay to each of the beamlets. The beamlets are spectrally broadened. The beamlets are coherently or incoherently recombined in space and/or time to provide the laser pulse.

Further disclosed is an optical arrangement for providing a high-energy laser pulse. The optical arrangement comprises a beamlet generating device providing a beamlet pattern of spatially distributed laser beamlets, an optical component for spreading the spatially distributed laser beamlets in time, a spectral broadening device, and a combining device for coherently or incoherently recombining the spectrally broadened beamlets in space and/or time to provide the laser pulse.

## Description

### TECHNICAL FIELD

The present invention relates to a method and an optical arrangement for providing ultrafast high-energy laser pulses.

### BACKGROUND

Applications increasingly demand ultrafast laser pulses at high peak and average power. Typical parameters range from terawatt-level (and beyond) peak powers and kilowatt-level (and beyond) average power, e.g., joule-level pulse energies in few (tens) of femtoseconds pulse length and kilohertz-level repetition rates. Traditional techniques to provide such laser pulses are limited in their ability to provide all of the required parameters by the same pulse.

For example, Ti: Sapphire-based laser systems have successfully demonstrated few tens of femtoseconds pulse lengths at joule-level energies, resulting in terawatt peak power, but are limited in scalability to high average power. This limit is a direct feature of the laser crystal properties. Ti: Sapphire intrinsically supports the required broad bandwidth to directly generate few-femtosecond pulses. This feature, however, necessarily results also in a large quantum defect and a very short lifetime of the excited state. The consequence is, that the pump-to-signal conversion is low, and a significant fraction of the absorbed pump energy is converted into heat, which makes the cooling of the laser material very challenging. The short lifetime prevents effective direct pumping of the laser gain material using laser diodes available today. Therefore, a Ti: Sapphire laser is typically pumped by another solid-state laser, which results in a very low, often only sub-percent level, wall-plug efficiency. Together, these constraints limit typical Ti: Sapphire lasers to average powers of few tens of watts.

In contrast to Ti: Sapphire lasers, Yb-doped solid-state lasers feature a much smaller quantum defect. In addition to the improved thermal management, the resulting milliseconds-lifetime allows them to be directly pumped by laser diodes and thus enables a high wall-plug efficiency of several ten percent. For this reason, Yb is the material of choice in many industrial laser systems, supporting kilowatt-level average powers, based on a wide range of architectures, including slabs, thin disks and fibres. However, the properties of the Yb laser medium necessarily support only a narrow bandwidth, compared to Ti: Sapphire. Consequently, pulse lengths are typically on a few-picoseconds to sub-picoseconds level, which may be enough to drive, e.g., material processing applications, but is far from the desired terawatt peak power required, e.g., by laser-plasma accelerators.

### SUMMARY

It is an object of the present invention to overcome the described limits, e.g. provide at least gigawatt-level ultrafast laser pulses at kilowatt-level (and above) average power.

The object is achieved by way of a method described hereafter and a corresponding optical arrangement, respectively.

To overcome the pulse length (peak power) limit, in particular of rare-earth doped lasers (e.g. Yb-based systems), laser pulses can be spectrally broadened after amplification using non-linear effects to provide the bandwidth required to support few-fs pulses, and then be compressed again before delivery to an interaction point.

For fibre lasers, the broadening can be done in a gasfilled hollow-core fibre. The fibre guides the laser pulse over an extended interaction length, while the gas acts as a non-linear medium, which broadens the spectrum. However, the laser damage threshold of a typical fibre has limited this concept to pulses of a few millijoule.

The method comprises providing a beamlet pattern. The beamlet pattern comprises a plurality of spatially distributed pulsed laser beamlets. In particular, providing the beamlet pattern can comprise splitting a single-aperture laser beam into the beamlets or alternatively directly generating the beamlet pattern. The beamlet pattern can be generated by a spatial arrangement of single laser beams, or from an arrangement of multiple fibres, or from a multicore fibre.

The beamlets are then spectrally broadened, in particular using non-linear effects, e.g. in a gas filled multi-pass cell. Experiments have shown that this technique can sufficiently broaden the spectrum of an initially one picosecond-level pulse to support few tens of femtosecond pulse lengths after compression. This technique therefore opens the path of linking the efficiency and average-power of laser systems such as Yb-based lasers with the short pulse lengths (peak powers) that have, so far, only been provided by Ti: Sapphire systems.

However, the pulse energy supported by a typical spectral broadening device scales only weakly with the size of the setup and renders this concept impractical for high pulse energies. In particular, the pulse energy supported by a multi-pass cell generally scales linearly with the distance between the two curved mirrors; a 100 millijoule pulse would already require a multi-pass cell length of the order of ten meters. It is obvious that a multi-pass cell size would become impractical for pulse energies of several joules.

These scaling limitations can be overcome by the use of beamlets instead of a single intense laser beam. However, those beamlets would interfere with each other in the region of interaction with the nonlinear medium, leading to intensities causing a breakdown of the broadening effect. Separating the beamlets in time, by delay of each single beam, the interaction of the single beams can be mitigated. In other words, by using multiple beamlets, the size constraint of the multi-pass cell is overcome. By spreading the beamlets in time, an intensity enhancement in focus is avoided, which originates from the Fourier transformation of a (transverse) beamlet distribution.

After spectral broadening, the beamlets can then be re-combined (coherently or incoherently) in space and/or time to provide the laser pulse.

Using a combination of beamlets has advantages.

Some applications, including laser-plasma acceleration, do not require a single coherent drive laser pulse. Rather, they demand a certain energy density, e.g. the energy within a certain volume or area. This is a significantly relaxed constraint. For example, a plasma wave can be driven by an incoherent combination of laser pulses. While the incoherent combination of many beamlets results in a substructure of the pulse envelope, both in space and time, the response of the plasma has a characteristic time and length scale, e.g., the plasma wavelength. If the substructure (in space and time) is sufficiently small, the plasma response averages over these variations, and the incoherently combined pulse effectively act as a single pulse. This insight enables schemes, where the drive laser pulse is formed from an incoherent combination of beamlets.

Laser pulse variations (pulse length, energy, beam profile and others) have an influence on the stability of a laser-plasma generated electron beam. Therefore, shot-to-shot stabilities on a sub-percent level (and even below) might be required for drive laser parameters such as the pulse length, energy and spot size to provide a laser intensity stability suitable to support electron beams with sub-percent repeatability in energy. In this regard, providing a drive laser pulse formed from a series of incoherently combined beamlets is particularly beneficial, as variations in individual beamlets would average out and stability requirements of individual beamlets are relaxed. This applies, in particular, to the spot size in focus and the pulse length. Incoherently combined beamlets driving a laser-plasma accelerator may be a solution for the drastic stability requirements demanded by the respective applications.

Advantageously, the method can further comprise a step of fine-tuning spatio-temporal properties (e.g. the transverse or temporal pulse envelope, the center wavelength of each beamlet) of the re-combined beamlet pattern and/or individual beamlets (e.g. delay between beamlets, pulse envelope, spectral bandwidth, etc.). Such capabilities may - for example - be required for coherent combining of the beamlets, and/or to provide a specific temporal or spatial shape of the recombined pulse.

In at least one preferred example, the method can further comprise the step of modifying (tuning) optical properties (e.g. beam divergence, spot size, etc.) of the beamlets prior to the step of spectral broadening. Matching the optical properties of the beamlets with the optical broadening device may enhance the overall efficiency of the system and/or the "quality" of the laser pulses (with respect to the requirements of the use-case).

In addition to the aforementioned method, an optical arrangement for providing an ultrafast high-energy laser pulse is proposed.

According to an aspect, the optical arrangement comprises a beamlet generating device providing a beamlet pattern of spatially distributed laser beamlets.

According to another aspect, the optical arrangement comprises a first optical component for spreading spatially distributed (pulsed) laser beamlets in time by introducing a different temporal delay to each of the beamlets. The first optical component can be a (first) step optic.

According to still another aspect, the optical arrangement comprises a spectral broadening device.

According to yet still another aspect, the optical arrangement comprises a combining device for coherently or incoherently recombining the beamlets in space and/or time to provide the laser pulse.

Preferably, the spectral broadening device can comprise at least one gas-filled multi-pass cell. The multi-pass cell can be a Herriott cell. A Herriott cell comprises two curved mirrors forming a cavity. A laser pulse, injected into the cavity, bounces many times between both mirrors. At each pass, the laser is focused at the cavity's symmetry plane. Injected with an angel, the laser spots form a ring pattern at the mirror surfaces. Depending on the specific parameters of the setup, a large number (typically several tens) of reflections are possible. Thereby, a Herriott Cell effectively folds up a long optical path using a very compact setup. At the focus, the laser intensity can be high enough to support non-linear effects. Adding a non-linear medium at the focus (symmetry) plane, e.g. the center plane of the cavity, the laser pulse interacts with the medium over many passes. For example, filling the multi-pass cell with a noble gas, the laser effectively accumulates spectral broadening over many passes. Alternatively, a non-linear crystal at the focal plane of the cavity can be used for spectral broadening. Experiments have shown that this technique can sufficiently broaden the spectrum of an initially picosecond-level pulse to support few-tens of femtosecond pulse lengths after compression. This technique therefore opens the path of linking the efficiency and average-power of laser systems such as Yb-based lasers with the short pulse lengths (peak powers) that have, so far, only been provided by Ti:Sapphire systems.

The spectral broadening device can be configured for amplitude filtering the beamlets by non-linear effects in a medium inside the spectral broadening device, in order to improve the spatio-temporal properties (e.g. beam quality) of the beamlets.

In at least one preferred example, the combining device can comprise a second optical component for temporally recombining the beamlets. In other words, the second optical component can be configured to (at least partially) cancel out the temporal delays introduced by the first optical component. The second optical component can be a (second) step optic.

Additionally, the combining device can comprise at least one diffractive, refractive and/or reflective optical element for spatially recombining the beamlets into a single laser pulse. In particular, said optical element can comprise a lens array or a phase plate.

In at least one particular example, the beamlet generating device can comprise a beam splitter for splitting a (pulsed) single-aperture laser beam into the beamlet pattern. The single-aperture laser beam can - for example - be provided by a thin-disk, slab or fibre laser. These laser sources are compact and efficiently deliver high-energy laser pulses. Then, spatially distributing the single laser pulses into a pattern of beamlets is comparatively simple and efficient. The beam splitter can comprise a diffractive, refractive or reflective optical device. In particular, said optical device can comprise a lens array, a mask, a grating or a phase plate.

According to an advantageous aspect, the optical arrangement can further comprise an imaging system having one or more refractive and/or reflective optical elements configured for modifying optical properties of the beamlets when matching the beamlet pattern into the spectral broadening device to enable the beamlets to properly pass the broadening device. According to another advantageous aspect, the optical arrangement can further comprise adaptive optics for aberration and wave-front control of the beamlet pattern and/or of individual beamlets.

According to still another advantageous aspect, the first and/or second optical component for introducing or removing a temporal delay between beamlets can comprise a reflective step optic or a transmittive step optic. A thin-film polarizer and a quarter-wave plate can be associated with the reflective step optic for modifying the temporal delay under normal or close-to-normal incidence.

According to yet still another advantageous aspect, the optical arrangement can further comprise actuated mirror elements for fine-tuning and/or stabilization of spatio-temporal properties of the beamlets, e.g. a defined temporal delay between beamlets and/or a pulse envelope. Consecutive laser pulses have a certain stability in pulse length with respect to each other. Variations in pulse length result from variations in the laser pulse generation and are typically around one percent. If a laser pulse is generated by superposition of many (but shorter) single pulses, the stability of the total pulse is determined particularly by the stability of the time delay between the single pulses. Therefore, the stability of the pulse length is no longer determined by the physical effects during amplification, and can be vastly improved. Some applications, e.g. laser-plasma acceleration, require a very stable pulse length.

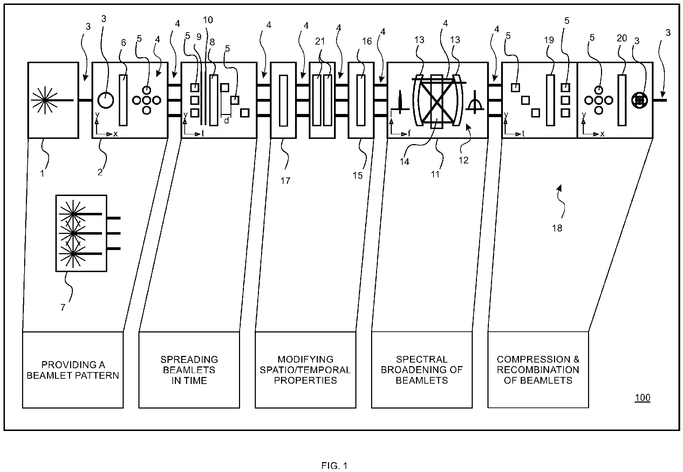

Further details and advantages are described in the following with reference to the drawings, which show in FIG. 1: a schematic representation of an optical arrangement for providing an ultrafast high-energy laser pulse.

### DETAILED DESCRIPTION

The optical arrangement 100 depicted in FIG. 1 comprises a beamlet generating device 2 providing a beamlet pattern 4 of spatially distributed laser beamlets 5. A vast variety of beamlet patterns can be provided. Optionally, the beamlet generating device 2 comprises a beam splitter 6 for splitting a pulsed single-aperture laser beam 3 into the beamlet pattern 4. The single-aperture laser beam 3 can be provided by a laser 1. The laser 1 can be a thin-disk, slab or fibre laser. In this particular example, the beam splitter 6 comprises an optical device, which device can be a diffractive, refractive or reflective optical device. For example, the optical device can comprise a lens array, a mask, a grating or a phase plate. Alternatively, the beamlet pattern 4 can directly be generated by an arrangement of fibre lasers, in particular in/by a multicore fibre of a multicore fibre laser 7.

The optical arrangement 100 further comprises an optical arrangement for spreading the spatially distributed laser beamlets 5 in time. The optical arrangement comprises a first optical component 8 for spreading spatially distributed pulsed laser beamlets 5 in time by introducing a different temporal delay d to each of the beamlets 5. In this particular example, the first optical component 8 is a reflective step optic. Optionally, the optical arrangement comprises a thin-film polarizer 9 and a quarter-wave plate 10 associated with the reflective step optic for introducing the temporal delay d under normal incidence or close to normal incidence. Alternatively, the optical component 8 can be a transmittive step optic.

Still further, the optical arrangement comprises a spectral broadening device 11. The spectrally broadening device 11 spectrally broadens the beamlets 5. In this particular example, the spectral broadening device 11 comprises at least one multi-pass cell 12, particularly a Herriott cell. The Herriott cell 12 is made up of two opposing spherical mirrors 13. A hole is machined into one of the mirrors 13 to allow the input laser beamlets 5 to enter the cavity. The beamlets 5 pass a medium 14 multiple times, while being reflected back and forth between the mirrors 13. The beamlets 5 may exit through a hole in one of the mirrors 13. Mere optionally, the spectral broadening device 11 is configured for amplitude filtering the beamlets 5 by non-linear effects in the medium 14 inside the spectral broadening device 11.

In this particular example, the optical arrangement 100 further comprises an optional imaging system 15 having one or more refractive and/or reflective optical elements 16 configured for modifying optical properties of the beamlets 5 (e.g. beam divergence, spot size, etc.) when imaging the beamlet pattern 4 into the spectral broadening device 11.

Mere optionally, the optical arrangement 100 comprises adaptive optics 17 for aberration and wavefront control of the beamlet pattern 4 and/or individual beamlets 5.

In this particular example, the optical arrangement 100 additionally comprises actuated mirror elements 21 for fine-tuning spatio-temporal properties of the beamlet pattern 4 (e.g. a temporal delay between beamlets) or individual beamlets 5 (e.g. the pulse envelope). The actuated mirror elements 21 are positioned in the beam path depending on the properties to be fine-tuned.

The optical arrangement 100 also comprises a combining device 18 for coherently or alternatively incoherently recombining the beamlets 5 in space and/or time to provide the laser pulse(s) 3. In this particular example, the combining device 18 comprises a second optical component 19 for temporally recombining (compressing) the beamlets 5. In this particular example, the second optical component 19 is a second step optic. The second step optic can be a transmittive or reflective step optic. The combining device can further comprise a thin-film polarizer and a quarter-wave plate associated with the reflective step optic. Mere optionally or alternatively, the combining device 18 also comprises at least one diffractive, refractive and/or reflective optical element 20 for spatially recombining the beamlets 5 into a laser beam 3. For example, the optical element 20 can comprise a lens array or a phase plate.

### REFERENCE SIGNS

- 100: optical arrangement
- 1: laser
- 2: beamlet generating device
- 3: single-aperture laser beam
- 4: beamlet pattern
- 5: laser beamlets
- 6: beam splitter
- 7: multicore fibre or multicore fibre laser
- 8: first optical component (e.g. a step optic)
- 9: thin-film polarizer
- 10: quarter-wave plate
- 11: spectral broadening device
- 12: multi-pass cell
- 13: mirror
- 14: medium
- 15: imaging system
- 16: optical element for modifying optical properties of the beamlets
- 17: adaptive optics
- 18: combining device
- 19: second optical component (e.g. a step optic)
- 20: optical element for spatially recombining the beamlets
- 21: actuated mirror element

## Claims

1. A method for providing a laser pulse, comprising, particularly in the following order, the steps of:
a. providing a beamlet pattern comprising a plurality of spatially distributed laser beamlets,
b. spreading the beamlets in time by introducing different temporal delays to each of the beamlets,
c. spectrally broadening the beamlets,
d. coherently or incoherently recombining the beamlets in space and/or time to provide the laser pulse.

2. The method according to claim 1, wherein providing the beamlet pattern comprises
I. splitting a single-aperture laser beam into the beamlets, or
II. generating the beamlet pattern
i. by a spatial arrangement of single laser beams, or
ii. from an arrangement of multiple fibres, or
iii. from a multicore fibre.

3. The method according to any one of the preceding claims, further comprising the step of fine-tuning spatio-temporal properties of the beamlet pattern and/or individual beamlets.

4. The method according to claim 3, comprising the step of modifying optical properties of the beamlets prior to the step of spectral broadening.

5. An optical arrangement, comprising:
a beamlet generating device providing a beamlet pattern of spatially distributed laser beamlets,
a first optical component for spreading spatially distributed laser beamlets in time by introducing a different temporal delay to each of the beamlets,
a spectral broadening device, and
a combining device for coherently or incoherently recombining the beamlets in space and/or time to provide a laser pulse.

6. The optical arrangement according to claim 5, wherein the spectral broadening device comprises at least one multi-pass cell, in particular wherein the multi-pass cell is a Herriott cell.

7. The optical arrangement according to claim 6, wherein the spectral broadening device is configured for amplitude filtering the beamlets by non-linear effects in a medium inside the spectral broadening device.

8. The optical arrangement according to any one of claims 5 to 7, wherein the combining device comprises a second optical component for temporally recombining the beamlets, in particular wherein the first optical component and/or the second optical component is a step optic.

9. The optical arrangement according to any one of claims 5 to 8, wherein the combining device comprises at least one diffractive, refractive and/or reflective optical element for spatially recombining the beamlets, in particular wherein the optical element comprises a lens array or a phase plate.

10. The optical arrangement according to any one of claims 5 to 9, wherein the beamlet generating device comprises a beam splitter for splitting a single-aperture laser beam into the beamlet pattern, in particular wherein the single-aperture laser beam is provided by a thin-disk, slab or fibre laser.

11. The optical arrangement according to claim 10, wherein the beam splitter comprises a diffractive, refractive or reflective optical device, in particular wherein the optical device comprises a lens array, a mask, a grating or a phase plate.

12. The optical arrangement according to any one of claims 5 to 11, further comprising an imaging system having one or more refractive and/or reflective optical elements configured for modifying optical properties of the beamlets when imaging the beamlet pattern into the spectral broadening device.

13. The optical arrangement according to any one of claims 5 to 12, further comprising adaptive optics for aberration and wavefront control of the beamlet pattern and/or individual beamlets.

14. The optical arrangement according to any one of claims 5 to 13, wherein the first and/or second optical component for introducing or removing a temporal delay between beamlets comprises
a reflective step optic, in particular wherein a thin-film polarizer and a quarter-wave plate are associated with the reflective step optic for modifying the temporal delay under normal or close-to-normal incidence, or
a transmittive step optic.

15. The optical arrangement according to any one of claims 5 to 14, further comprising actuated mirror elements for fine-tuning spatio-temporal properties of the beamlets, in particular wherein the spatio-temporal properties to be tuned comprise a temporal delay between the beamlets.
